# EUROPÄISCHE PATENTSCHRIFT

(11) **EP 0 570 438 B1**
(45) Veröffentlichungstag und Bekanntmachung des Hinweises auf die Patenterteilung: **21.09.1994**
(21) Anmeldenummer: 92904039.2
(22) Anmeldetag: 06.02.1992
(51) Int. Cl.: F16D 66/00, F16D 66/02

(54) **ÜBERWACHUNGSEINRICHTUNG FÜR SCHEIBENBREMSEN VON STRASSENFAHRZEUGEN, INSBESONDERE NUTZFAHRZEUGEN**
MONITORING DEVICE FOR DISC BRAKES ON ROAD VEHICLES, ESPECIALLY COMMERCIAL VEHICLES
DISPOSITIF DE CONTROLE DE FREINS A DISQUES DE VEHICULES ROUTIERS, NOTAMMENT DE VEHICULES UTILITAIRES

(30) Priorität: 08.02.1991 DE 4103917
(43) Veröffentlichungstag der Anmeldung: 24.11.1993
(73) Patentinhaber: KNORR-BREMSE AG, 80710 München (DE)
(72) Erfinder: MROSEK, Helmut, D-8000 München 40 (DE)
(86) Internationale Anmeldenummer: DE9200094
(87) Internationale Veröffentlichungsnummer: WO9214075

(56) Entgegenhaltungen:
- EP-A- 0 189 082
- WO-A-84/00406
- DE-A- 3 643 047
- DE-A- 3 842 723
- US-A- 4 569 600
- Automotive Engineering, volume 95, No. 6, 1st June 1987, Warrendale, US , Toyota:"Measuring transient temperatures in brake rotors", pages 53-57
- Patent Abstracts of Japan, volume 9, No. 307 (M-435)(2030), 4 December 1985; & JP-A-60143255

## Beschreibung

Die Erfindung betrifft eine Überwachungseinrichtung nach dem Gattungsbegriff des Patentanspruches 1.

Scheibenbremsen von Straßenfahrzeugen, insbesondere von Nutzfahrzeugen, besitzen ein deutlich anderes Verhalten, als es im allgemeinen von Trommelbremsen bekannt ist. Trommelbremsen zeigen durch ihr Fading an, wenn die Bremsbeläge deutlich abgenutzt sind und/oder die Bremsentemperatur auf unzulässige Höhe gestiegen ist. Der Fahrer ist in diesem Fall gezwungen, den Bremsdruck und folglich auch die Pedalkraft über den gewohnten Wert zu steigern, was ihm als Anzeichen für den Zustand der Bremsen dient, so daß gff. die Fahrweise danach eingerichtet werden kann.

Demgegenüber zeigen Scheibenbremsen selbst bei stark abgenützten Bremsbelägen und höchster Bremstemperatur kein Fading an, so daß der Fahrer selbst kurz vor dem Versagen der Bremsen keinen Hinweis auf die drohende Gefahr erhält. Aus diesem Grunde ist es zweckmäßig, Scheibenbremsen zumindest mit einer Temperaturüberwachung auszustatten. Zu diesem Zweck könnten Temperatursensoren jeweils in den kritischen Bauteilen angebracht werden, so wie es für Meßzwecke in der Erprobung üblich ist. Diese Anordnung hat jedoch Nachteile: Bei Montage des Sensors im Material der Bremsscheibe, welche als baulich aufwendig anzusehen ist, ist mit Problemen zuverlässiger Messung zu rechnen. Dies gilt auch bei Montage der Sensorelemente in den Bremsbelägen der Scheibenbremse, um so mehr, als bei einem Scheiben- oder Belagwechsel ein Verlust der Sensoren hinzunehmen ist. Bei unmittelbarer Positionierung im Bauteil (Bremsscheibe oder Bremsbelag bzw. Belagträgerblech) ist im übrigen ein sehr hoher Meßbereich erforderlich.

Aus der WO-A- 8400406, Fig.2, ist eine Überwachungseinrichtung der eingangs genannten, gattungsgemäßen Art bekannt. Diese Druckschrift offenbart die Anordnung eines Temperatursensors an einem die Bremsscheibe radialaußen überquerenden Haltebügel für die Bremsbeläge an einem Bremssattel. Der Sensor ist dabei abgewandt zur als Vollscheibe ohne Belüftung ausgebildeten Bremsscheibe am Haltebügel, diesen in Umfangsrichtung der Bremsscheibe beidseitig überragend, etwa in der radialen Mittelebene der Bremsscheibe angeordnet. Der Sensor muß somit vor allem die Infrarotstrahlung der Bremsscheibe erfassend ausgebildet werden, es fehlt ein verläßlicher Kühlluftstrom von der Bremsscheibe, dessen Temperatur verläßliche Werte zum Kalkulieren auf die Bremsscheibentemperatur liefern könnte. Eine geringfügige, von der Oberfläche der Bremsscheibe induzierte, radiale Luftabströmung ist durch Umgebungseinflüsse, insb. Windverhältnisse, derart ablenk- und verfälschbar, daß sie die Temperatursensierung nur verfälschend beeinflussen kann. Der erwähnten Druckschrift ist des weiteren die Anordnung eines Temperatursensors seitlich der Bremsscheibe entnehmbar, eine deratige Anordnung ist jedoch in noch verstärktem Maß von den vorstehend erwähnten Mängeln betroffen.

Für Scheibenbremsen sind sog. innenbelüftete Bremsscheiben bekannt, welche zwei axial zueinander versetzte Reibringe mit zwischen diesen sich erstreckenden, im wesentlichen radialen Kühlrippen aufweisen. Die Kühlrippen wirken dabei bei Rotation der Bremsscheibe als einen Kühlluftstrom antreibende Ventilationsflügel.

Von diesem Stand der Technik ausgehend besteht die Aufgabe der Erfindung darin, eine Überwachungseinrichtung der in Rede stehenden Art so auszugestalten, daß die vorstehend erwähnten Nachteile teuren Aufbaues und unzuverlässiger Messung vermieden werden. Es soll insbesondere möglich sein, durch die Temperaturmessung einen exakten Bezug zum Belagverschleiß herzustellen.

Zur Lösung dieser Aufgabe dienen die Merkmale nach dem Kennzeichnungsteil des Patentanspruches 1.

Durch die erfindungsgemäße Anordnung wird nicht die Bauteiltemperatur, sondern eine andere, für den Bremsenzustand typische Temperatur gemessen, nämlich die Temperatur, welche bei innenbelüfteten Bremscheiben im Kühlluftstrom besteht. Auf Grund der guten Korrelationen der Temperaturen kritischer Bauteile und der typischen Temperatur sowie deren Höhe im gefährlichen Bereich lassen sich kostengünstige und zuverlässige Temperaturüberwachungen vollziehen. Vorzugweise ist der Abstand der Sensorelemente in Relation zu den kritischen Bauteilen einstellbar, wodurch unter Verwendung von Auswertelektroniken zuverlässige Meßwerte für Scheibenbremsen unterschiedlichen Aufbaues gewonnen werden können.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
- Fig.1: ist eine Teilschnittansicht einer erfindungsgemäßen Überwachungseinrichtung mit einem im Bremssattel unter Abstand zur Bremsscheibe geführten Sensor; und
- Fig.2: ist eine vereinfachte Seitenansicht einer weiteren Ausführungsform einer erfindungsgemäßen Überwachungseinrichtung unter Darstellung des an einem Haltebügel eingeführten Sensors.

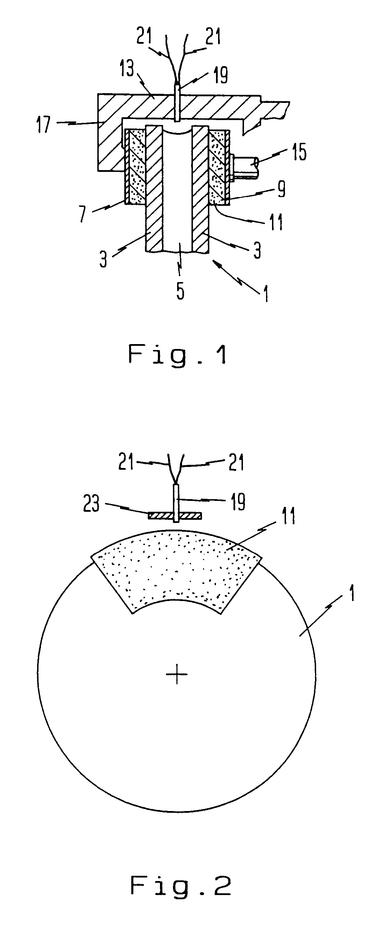

In Fig.1 der Zeichnung, welche eine Teilschnittansicht einer Scheibenbremse für Nutzfahrzeuge wiedergibt, ist eine Bremsscheibe 1 dargestellt, welche im dargestellten Ausführungsbeispiel aus zwei Reibringen 3 mit zwischen den Reibringen sich erstreckenden Kühlrippen 5 besteht. Beidseitig der Bremsscheibe 1 sind in an sich bekannter Weise Bremsbacken 7 vorgesehen, welche jeweils aus einem Belagblech 9 und einem daran befestigten Bremsbelag 11 bestehen. Die Bremsscheibe 1 wird fernerhin von einem Bremssattel 13 übergriffen, welcher im dargestellten Ausführungsbeispiel als Schiebesattel ausgebildet ist. An dem in der Darstellung nach Fig.1 rechten Bremsbelag greift ein über einen Stößel 15 wirkender (nicht dargestellter) Kolben an, derart, daß der Bremsbelag 11 bei Kolbenbetätigung an die Bremsscheibe 1 bzw. dessen Reibring angepreßt wird, während sich der Bremssattel 13 im Gegensinn nach rechts gerichtet verschiebt und mittels des linksseitigen Bremssattelarms 17 gegenüber der links befindlichen Bremsbacke zur Wirkung gelangt. Die insoweit beschriebene Anordnung ist von herkömmlicher Art und nur beispielhaft erläutert; es können auch Bremsscheiben- und Bremssattelkonstruktionen anderer, an sich bekannter Konstruktion im Rahmen des der Erfindung eigenen Gedankens zur Anwendung gebracht werden.

Gemäß Darstellung in Fig.1 ist der am Außenumfang der Bremsscheibe 1 parallel zu deren Längsachse sich erstreckende Bremssattel 13 von einem stabförmigen Sensor 19 durchsetzt, wobei der Sensor 19 in eine entsprechende Aufnahmebohrung im Bremssattel einschiebbar oder einschraubbar eingefügt ist. Vorteilhafterweise ist die Relativlage des Sensors 19 bzw. seiner am Ende befindlichen Sensorspitze gegenüber dem Außenumfang der Bremsscheibe 1 einstellbar. Vom Sensor 19 erstrecken sich Leitungen 21 zu einer Auswerteelektronik, welche der jeweiligen Bremsscheibenkonstruktion angepaßt sein kann. Der Sensor 19 mißt in seiner dargestellten Lage nach Fig.1 die Temperatur am Außenumfang der Bremsscheibe 1; es handelt sich um die Temperatur des Kühlluftstromes, welcher vorzugsweise bei Verwendung von Kühlrippen 5 unmittelbar am Außenumfang der Bremsscheibe abgefühlt werden kann. Der Sensor 19 mißt fernerhin in direkter Weise Strahlungswärme, welche im unmittelbaren Umfangsbereich der Bremsscheibe abgenommen werden kann. Es ist natürlich auch möglich, mehrere derartige Sensoren 19 vorzusehen, wobei deren Abstand von der Bremsscheibe bzw. von den Bremsbelägen exakt definiert werden kann, um den jeweiligen Positionen entsprechende Meßwerte zu erhalten. Vorteilhafterweise mißt der Sensor in überwiegend radialer Ausrichtung zur Drehachse der Bremsscheibe. Auch bei aus Vollkörpern bestehenden Bremsscheiben, also Bremsscheiben ohne Lüftungselementen, ist eine derartige Temperaturmessung mit Hilfe von Sensoren möglich, wobei für die Auswerteelektronik andere Kriterien gelten.

In Fig.2 der Zeichnung ist eine weitere Ausführungsform der Sensoranordnung nach der Erfindung wiedergegeben. Bei Scheibenbremsen der in Rede stehenden Art sind am Außenumfang der Belagträgerbleche im allgemeinen Belaghaltefedern vorgesehen, welche ihrerseits am Bremssattel eingehängt sind und gegenüber den Belagblechen bzw. Bremsbelägen eine federnde Haltekraft ausüben. Quer zu diesen Belaghaltefedern erstreckt sich zu deren baulicher Sicherung im allgemeinen ein Haltebügel, welcher einseitig am Bremssattel eingehängt und an der anderen Seite verschraubbar gehaltert sein kann. Bei der in Fig.2 schematisch wiedergegebenen Anordnung ist (ohne Darstellung der Belaghaltefedern) ein Haltebügel 23 wiedergegeben, welcher erfindungsgemäß auch zur Befestigung eines Sensors 19 dient. Der Sensor 19 ist wie bei der Ausführungsform nach Fig.1 in eine im Haltebügel 23 befindliche Bohrung eingeschoben bzw. eingeschraubt und nimmt höhenveränderlich eine Meßposition am Außenumfang der Bremsscheibe 1, unter Abstand zu dieser sich erstreckend, ein. Die Anordnung nach Fig.2 ist von besonders einfacher Bedienbarkeit, da der Sensor zumindest bei jedem Austausch der Bremsbeläge, d.h. bei jedem Abnehmen des Haltebügels, in seiner Position neu eingestellt werden kann.

Im Rahmen des der Erfindung eigenen Gedankens ist es auch möglich, sowohl am Aufbau des Bremssattels in der aus Fig.1 ersichtlichen Weise als auch zusätzlich am Haltebügel gemäß Ausführungsform nach Fig.2 jeweils einen Sensor oder mehrere derartige Sensoren vorzusehen.

### Bezugszeichenliste

- 1: Bremsscheibe
- 3: Reibring
- 5: Kühlrippe
- 7: Bremsbacke
- 9: Belagblech
- 11: Bremsbelag
- 13: Bremssattel
- 15: Stößel
- 17: Bremssattelarm
- 19: Sensor
- 21: Leitung
- 23: Haltebügel

## Patentansprüche

1. Überwachungseinrichtung für Scheibenbremsen von Straßenfahrzeugen, insb. Nutzfahrzeugen, mit einem zur Temperaturüberwachung dienenden Sensor (19), der nahe des Außenumfangs der Bremsscheibe (1) unter Abstand zu dieser und etwa in deren radialer Mittelebene am Aufbau der Bremssattelanordnung, gegebenenfalls deren sich quer zur Bremsscheibe (1) erstreckenden Haltebügel (23) für die Bremsbeläge, gehaltert ist, dadurch gekennzeichnet, daß der Sensor (19) mit überwiegend radialer Richtung zur Drehachse der Bremsscheibe (1) in einer Bohrung des Bremssattels (13) bzw. dessen in Umfangsrichtung der Bremsscheibe den Sensor (19) beidseitig überragenden Haltebügels (23) zwischen dem Bremsscheibenaußendurchmesser und dem Bremssattel (13) bzw, dem Haltebügel (23) gehaltert ist, wobei sich die Sensorspitze im Kühlluftstrom der wie bekannt innenbelüftet ausgebildeten Bremsscheibe (1) befindet.

2. Überwachungseinrichtung nach Anspruch 1, dadurch gekennzeichnet, daß der Sensor (19) in der den Bremssattel (13) durchsetzenden Bohrung bzw. der Bohrung des Haltebügels (23) höhenverstellbar gehaltert ist.

3. Überwachungseinrichtung nach einem der vorangehenden Ansprüche, dadurch gekennzeichnet, daß Sensoren (19) sowohl im Bremssattel (13) als auch im Haltebügel (23), bezüglich des Außenumfangs der Bremsscheibe (1) unter Winkelabstand zueinander, angeordnet sind.

4. Überwachungseinrichtung nach einem der vorangehenden Ansprüche, dadurch gekennzeichnet, daß mehrere Sensoren mit unterschiedlichem Abstand bezüglich des Außenumfangs der Bremsscheibe (1) im Bremssattel (13) bzw. im Haltebügel (23) angeordnet sind.

## Claims

1. A monitoring device for disc brakes on road vehicles, especially commercial vehicles, with a sensor (19) for monitoring temperature, which in the vicinity of the external circumference of the brake disc (1) at a distance therefrom and approximately in the radial centre plane of the brake disc is secured to the structure of the brake saddle arrangement, optionally the saddle arrangement mounting bracket (23) extending tranversely to the brake disc (1) for the brake linings, characterised in that the sensor (19) is mounted in a predominantly radial direction relative to the axis of rotation of the brake disc (1) in a bore in the brake saddle (13) or in the brake saddle mounting bracket (23) projecting either side of the sensor (19) in the circumferential direction of the brake disc between the brake disc external diameter and the brake saddle (13) or mounting bracket (23), the sensor tip being arranged in the cooling air flow of the brake disc (1) constructed as known with internal ventilation.

2. A monitoring device according to claim 1, characterised in that the sensor (19) is secured in the bore penetrating the brake saddle (13) or the bore in the mounting bracket (23) so as to be vertically adjustable.

3. A monitoring device according to one of the preceding claims, characterised in that sensors (19) are arranged both in the brake saddle (13) and in the mounting bracket (23) angularly spaced apart from one another relative to the external circumference of the brake disc (1).

4. A monitoring device according to one of the preceding claims, characterised in that a plurality of sensors are arranged in the brake saddle (13) or in the mounting bracket (23) at different distances relative to the external circumference of the brake disc (1).

## Revendications

1. Dispositif de contrôle pour des freins à disque de véhicules automobiles, notamment de véhicules utilitaires, comportant un capteur (19) utilisé pour le contrôle de la température et qui est fixé à proximité de la périphérie extérieure du disque de frein (1), à une distance de ce dernier et approximativement dans son plan médian radial sur la structure du dispositif d'étrier de frein, éventuellement sur leurs étriers de retenue (23) qui s'étendent transversalement par rapport au disque de frein (1) et servent à retenir les garnitures de frein, caractérisé par le fait que le capteur (19) est retenu, dans une direction essentiellement radiale par rapport à l'axe de rotation du disque de frein (1), dans un perçage de l'étrier de frein (13) ou dans son étrier de retenue (23), qui fait saillie des deux côtés par rapport au capteur (19), dans la direction circonférentielle du disque de frein, entre la périphérie extérieure du disque de frein et l'étrier de frein (13) ou l'étrier de retenue (23), la pointe du capteur étant située dans le courant d'air de refroidissement du disque de frein (1), réalisé comme cela est connu avec une ventilation intérieure.

2. Dispositif de contrôle suivant la revendication 1, caractérisé par le fait que le capteur (19) est retenu de manière à être réglable en hauteur dans le perçage qui traverse l'étrier de frein (13), ou dans le perçage de l'étrier de retenue (23).

3. Dispositif de contrôle suivant l'une des revendications précédentes, caractérisé par le fait que des capteurs (19) sont disposés aussi bien dans l'étrier de frein (13) que dans l'étrier de retenue (23), à une certaine distance angulaire réciproque sur la périphérie extérieure du disque de frein (1).

4. Dispositif de contrôle suivant l'une des revendications précédentes, caractérisé par le fait que plusieurs capteurs sont disposés à une distance variable sur le pourtour extérieur du disque de frein (1), dans l'étrier de frein (13) ou dans l'étrier de retenue (23).
